**Europäisches Patentamt**

**European Patent Office**

**Office européen des brevets**

(19)

(11) Publication number : **0 300 779 B1**

# (12) EUROPEAN PATENT SPECIFICATION

(45) Date of publication of patent specification :
**01.04.92 Bulletin 92/14**

(51) Int. Cl.⁵ : **B60C 9/28,** B60C 15/06, B60C 3/04

(21) Application number : **88306688.8**

(22) Date of filing : **21.07.88**

(54) Pneumatic Tyre.

(30) Priority : **21.07.87 JP 182833/87**

(43) Date of publication of application :
**25.01.89 Bulletin 89/04**

(45) Publication of the grant of the patent :
**01.04.92 Bulletin 92/14**

(84) Designated Contracting States :
**DE FR GB IT**

(56) References cited :
**EP-A- 0 098 353**
**EP-A- 0 295 899**
**DD-A- 238 360**
**DE-A- 3 314 563**
**US-A- 4 100 955**
**US-A- 4 589 461**

(73) Proprietor : **SUMITOMO RUBBER INDUSTRIES LIMITED**
**No. 1-1, Tsutsui-cho 1-chome**
**Chuo-ku Kobe-shi Hyogo 651 (JP)**

(72) Inventor : **Kakumu, Kiichiro**
**16-7 Sumiyoshiyamate 8-chome Higashi Nada-ku**
**Kobe-shi Hyogo-ken (JP)**
Inventor : **Nakajima, Tokuzo**
**14-F709, Minatojima nakamachi 6-chome**
**Chuo-ku Kobe-shi Hyogo-ken (JP)**

(74) Representative : **Stewart, Charles Geoffrey**
**SP TYRES UK LIMITED Tyre Technical Division**
**Fort Dunlop Birmingham B24 9QT (GB)**

## Description

The present invention relates to a pneumatic tyre to reduce road noise in an automobile.

Recently, high performance cars are requested to be quieter when travelling in addition to having high performance, high stability and the like. Accordingly, the tyres used for such cars are required to have a lower noise characteristic.

As well as the noise derived from the tyre itself there are, amongst others, squeal noise, pattern noise such as pumping noise and impact noise which are derived from the tread pattern.

On the other hand, there is road noise heard in the interior of vehicle when running on a rough paved road. This road noise is caused in the following manner: the tread and sidewalls of the tyre are vibrated by roughness of the road surface, and this vibration is transmitted to the vehicle body through the suspension and other members beneath the car body. It generates sound in the interior of vehicle, that is, road noise.

Therefore, to reduce the road noise, it is necessary to improve the vibration transfer characteristics of the tyre, that is, the transmissibility of the tyre.

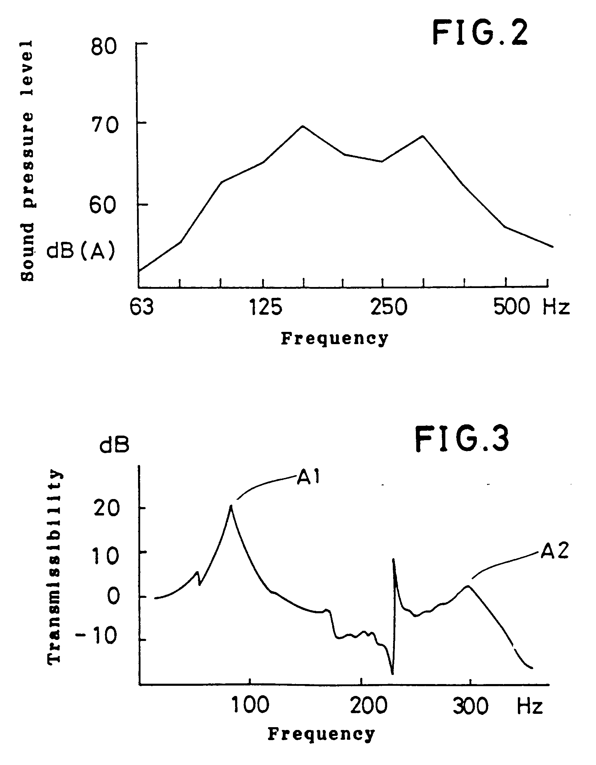

Fig.2 shows the result of a frequency analysis of such road noise in 1.3 octave steps for a 155SR13 car tyre. In this case the sound pressure level was high in the band 100 to 315 Hz.

On the other hand, the transfer function of the same tyre was measured by an impact test where the tyre was subjected to an impact by an hammer. In the test, as shown in Fig.3 which shows the result of the measurement, peaks A1 and A2 due to resonance were detected around 85 Hz and 300 Hz, from which it has been found that the 80 Hz peak A1 and the 300 Hz peak A2 were caused by the primary resonance in the circumferential direction of tyre and a resonance in the radial direction of tyre, respectively. It is therefore proposed for the reduction of road noise in the 155SR13 tyres to decrease the transmissibility especially in the range of 100 to 315Hz. For that purpose, it is preferable to make the frequency of the first peak A1 lower than 85 Hz so as to keep the foot area of the first peak A1 further from the frequency 100 Hz of the road noise, and also preferable to make the frequency of the second peak A2 higher than the frequency 315 Hz of the road noise so as to as far as possible keep the foot area thereof apart from the frequency of the road noise. Thus the road noise in the above-mentioned range is lowered. Then on the basis that the frequency of the first peak A1 is related to the stiffness of the bead portions, and the frequency of the second peak A2 is related to the stiffness of the belt reinforcement, the present invention was finalised.

A type according to the preamble of claim 1 is disclosed e.g. in US-A- 4 589 461.

It is an object of the present invention to provide a pneumatic tyre which is improved in belt structure and bead structure to reduce road noise.

According to the present invention, a pneumatic tyre comprises a pair of bead cores, a carcass ply turned up around said bead cores to form a pair of turnup portions, a pair of bead apexes extending radially outwardly from said bead cores respectively, a tread disposed radially outside the crown portion of said carcass, and a belt disposed between said carcass and said tread and comprising at least two plies of cords including a narrower belt ply and a wider belt ply, the width of said narrower belt ply being larger than the ground contact width defined as the axial distance between the edges of the ground contacting region of said tread, characterised in that the tread is made of rubber having a JIS A hardness of not more than 60 degrees, the thickness of the tread rubber is not less than 10mm, and the thickness T1 at the tyre equator is larger than the thickness T2 at the edges of the ground contacting region of the tread, and the difference T1-T2 therebetween is not less than 1.5mm, the ratio Hb/H of a radial height Hb from the upper end of said bead core to the upper end of said bead apex a to the tyre section height H is less than 0.4, the ratio Hc/Hb of the radial heigth Hc from said upper end of said bead core to the upper end of said carcass turnup portion to said height Hb of said upper end of said bead apex is less than 0.5.

An embodiment of the present invention will be now described in detail referring to the accompanying drawings; in which:

Fig.1 is a sectional view showing an embodiment of the present invention

Fig.2 is a diagram showing a spectrum of road noise

Fig.3 is a diagram showing transfer characteristics of a prior art tyre

Fig.4 is a diagram showing transfer characteristics of of the invention

Fig.5 is a diagram showing the ground contact region of the tyre.

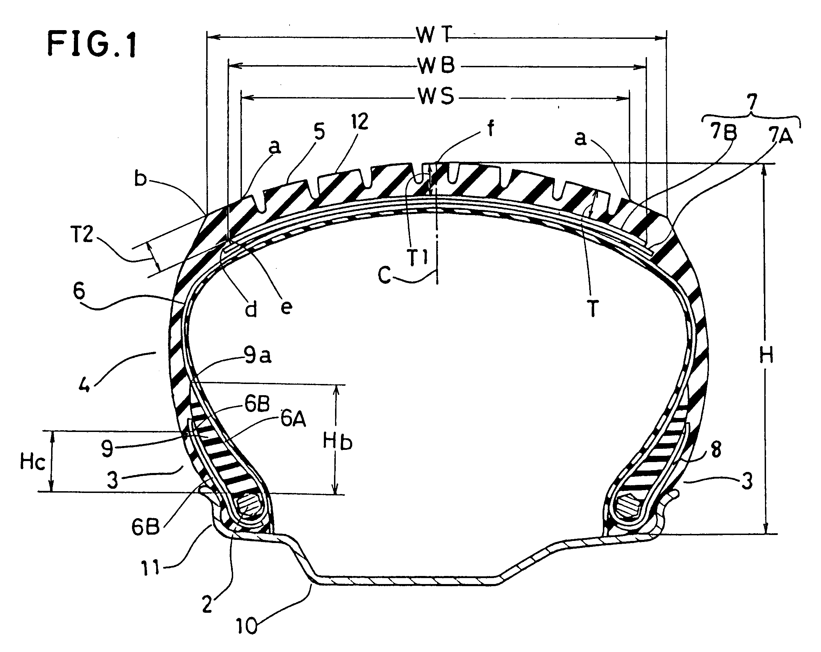

In Fig.1, the pneumatic tyre 1 has bead portions 3 on both sides thereof, sidewalls 4 extending radially outwardly from each bead portion 3, and a tread 5 between the upper ends of the sidewalls. A pair of bead cores 2 are provided and a pair of bead apexes 9, a carcass 6 extending between the bead portions, and a tread reinforcing belt 7.

The carcass 6 has one to three plies of radial cords. In this embodiment one ply of radial cords is used arranged at an angle of 80 to 90 degrees to the tyre equatorial plane C. The carcass ply is turned up around

EP 0 300 779 B1

the bead cores 2 axially from the inside to outside thereof, whereby a carcass main portion 6A between the bead portions and two carcass turnup portions 6B axially outside the respective bead cores are formed. For the carcass ply cords, steel cords, or fibre cords made of nylon, polyester, rayon, aromatic polyamide or the like are used.

The belt 7 is disposed radially outside the crown portion of the carcass 6 and between the carcass 6 and the tread 5. The belt 7 comprises two plies 7A and 7B of parallel cords arranged at relatively small angles to the tyre equatorial plane C so that the cords of the inner first ply 7A on the carcass side and the cords of the outer second ply 7B on the upper side are inclined in reverse directions with respect to the tyre equatorial plane C. In this embodiment, the first ply 7A of the belt 7 is wider than the second ply 7B, and the cords of both the first and second plies are made of metal, but organic fibre cords may be used.

Each bead portion 3 is provided with a bead apex 9 and a reinforcing layer 8.

The bead apexes 9 are made of rubber and disposed between the carcass main portion 6A and the carcass turned up portions 6B.

The reinforcing layer 8 comprises one or more plies of cords such as metal cords or fibre cords. The reinforcing layer 8 is disposed on the outside of the carcass turned up portion 6B, and extends radially inwardly to the lower end of the bead core and radially outwardly beyond the upper end of the carcass turned up portion.

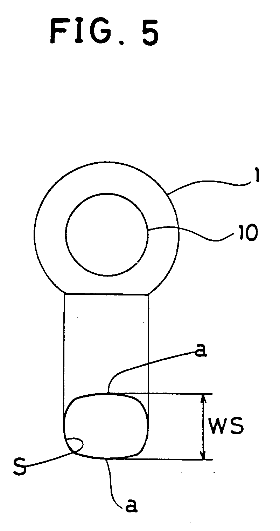

When the tyre 1 is mounted on a standard rim 10 with flanges 11 and inflated to its standard internal pressure and mounted on a vehicle under normal load, the outer surface of the tread 5, that is, the tread surface12 is curved in cross section including the tyre axis so that, as shown in Fig.5 also the ground contact width WS, defined as the axial distance between the edges a of the ground contacting region S, becomes smaller than the tread width WT between the edges b of the tread portion.

Upon investigation of the resonance frequency of various tyres it has been discovered that the width of the belt is closely related to the resonance frequency in the radial direction, and this resonance frequency can be increased by setting the width of the narrower ply wider than the ground contact width, that is, by setting the widths of at least two plies wider than the ground contact width WS.

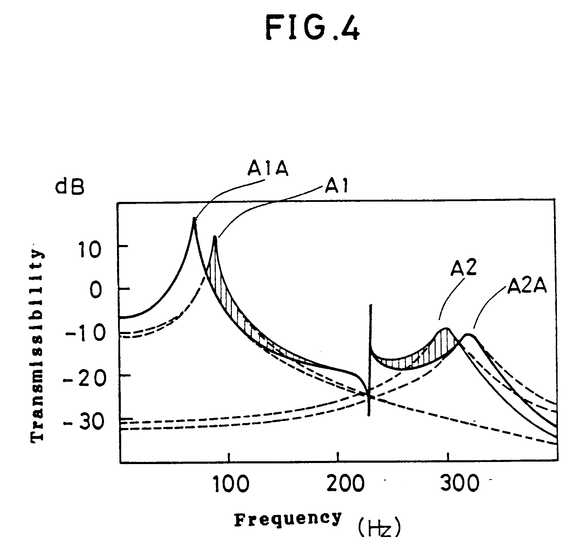

In the pneumatic tyre 1, therefore, the width WB between the edges e of the narrower ply of the belt 7, or the second ply 7B in this embodiment is set larger than the ground contact width WS, and moreover, the edges d of the wider first ply 7A extend up to portions beneath the tread edges b, so that the width of the first ply 7A becomes larger than the ground contact width WS. As a result, as shown in Fig.4, the resonance frequency of 300 Hz of the peak A2 is increased to produce a peak A2A at a frequency beyond 315Hz, and the vibration transmission to the car body, that is, the road noise is lowered.

Furthermore, in the tyre 1, the ratio Hb/H of the height Hb of the upper end 9a of the bead apex 9 to the tyre sectional height H is less than 0.4, and further the ratio Hc/Hb of the height Hc of the upper end 6Ba of the carcass turnup portion 6B to the height Hb of the bead apex 9 is less than 0.5, so that the height Hb of the upper end 9a of the bead apex 9 and the height Hc of the upper end 6Bz of the carcass turnup portion 6B are measured from the upper end of the bead core 2, and the tyre sectional height H is defined as a height of the highest point f on the tread surface 12 from the bottom of the bead portion.

Thus to lower the primary resonance frequency in the circumferential direction around 85 Hz, it is found effective to lower the stiffness of the bead portion 3 by setting the height Hb of the bead apex 9 and the height Hc of the carcass turnup portion 6B in the above-mentioned ranges, whereby the frequency of 85 Hz of the peak A1 is lowered to produce a peak A1A due to the primary resonance in the circumferential direction of the tyre at a frequency lower than 85 85 Hz. As a result, the transmission to the car body is decreased, and the road noise is lowered.

Furthermore, in order to suppress the road noise, it is more effective to absorb the vibration caused by the road surface in addition to the above-mentioned improvement of the vibration transfer characteristics. For this purpose, the hardness of the tread rubber 5 is set to be not more than 60 degrees in JIS A hardness, and the thickness T of the tread rubber is set to be not less than 10 mm. Preferably, the thickness T1 at the tyre equator C is set larger than the thickness T2 at both edges a of the ground contacting regions S so that the difference T1-T2 therebetween becomes larger than 1.5mm.

To show the effect test tyres and comparison tyres were made and tested. The size was and embodiment tyres 1 to 4 reference tyres 1 and 2 were experimentally fabricated according to the specifications shown in Table 1. The primary resonance frequency in the circumferential direction, resonance frequency in the radial direction, and road noise were individually measured of the results are given in Table 1.

3

## Table 1

| Tyre | Embodiment | | | | Reference | |
|---|---|---|---|---|---|---|
| | 1 | 2 | 3 | 4 | 1 | 2 |
| WB-WS (mm) | +4 | +4 | +4 | +4 | -4 | -4 |
| Hb/H | 0.3 | 0.3 | 0.3 | 0.3 | 0.35 | 0.3 |
| Hc/Hb | 0.25 | 0.25 | 0.25 | 0.25 | 1.25 | 0.25 |
| Tread rubber hardness, JIS A | 63 | 59 | 59 | 59 | 63 | 63 |
| Tread rubber thickness (mm) | 9.7 | 9.7 | 11.0 | T1=12 T2=10 | 9.7 | 9.7 |
| Circumferential primary resonance frequency (Hz) | 83 | 83 | 80 | 80 | 89 | 82 |
| Radial resonance frequency (Hz) | 340 | 339 | 338 | 336 | 319 | 306 |
| Road noise dB (A) | | | | | | |
| Overall | 74.3 | 73.9 | 73.5 | 73.3 | 75.8 | 75.0 |
| 160 Hz | 68.8 | 68.4 | 68.0 | 67.5 | 70.6 | 69.0 |
| 316 Hz | 67.6 | 67.2 | 66.9 | 66.9 | 69.2 | 69.4 |

It is evident from Table 1 that the road noise is lowered in the embodiments compared to CB references. It is evident from Table 1 that the road noise is lowered in the embodiment compared to the references.

As described above, in the pneumatic tyre according to the invention, by setting the narrower ply of the belt to have a greater width than the ground contact width, and defining the heights of the bead apex and the carcass turnup portion within specified ranges, the resonance in the circumferential direction and that in the radial direction of the tyre can be deviated from the frequency range of the road noise to decrease the transmission function in this range. Accordingly, the road noise is effectively lowered, enhancing the quietness of the vehicle.

## Claims

1. A pneumatic tyre comprising a pair of bead cores (2), a carcass ply (6) turned up around said bead cores (2) to form a pair of turnup portions (6A,6B), a pair of bead apexes (9) extending radially outwardly from said bead cores (2) respectively, a tread (5), disposed radially outside the crown portion of said carcass (6), and a belt (7) disposed between said carcass (6) and said tread (5) and comprising at least two plies (7A,7B) of cords including a narrower belt ply (7B) and a wider belt ply (7A), the width (WB) of said narrower belt ply (7B) being larger than the ground contact width (WS) defined as the axial distance between the edges of the ground contacting region of said tread (5), characterised in that the tread (5) is made of rubber having a JIS A hardness of not more than 60 degrees, the thickness of the tread rubber is not less than 10mm, the thickness T1 at the tyre equator (C) is larger than the thickness T2 at the edges of the ground contacting region (12) of the tread (5), and the difference T1-T2 therebetween is not less than 1.5mm, the ratio Hb/H of a radial height Hb from the upper end of said bead core (2) to the upper end of said bead apex (a) to the tyre section height H is less than 0.4, and the ratio Hc/Hb of the radial height Hc from said upper end of said bead core (2) to the upper end of said carcass turnup portion (6B) to said height Hb of said upper end (9a) of said bead apex is less than 0.5.

## Patentansprüche

1. Luftreifen, welcher umfaßt ein Paar Wulstkerne (2), eine um die Wulstkerne (2) zur Bildung von einem Paar aufgeschlagener Abschnitte (6A, 6B) nach oben geschlagene Karkasslage (6), ein Paar Wulstreiter (9), die sich von den Wulstkernen (2) jeweils radial nach außen erstrecken, eine radial außerhalb des Kronenabschnitts der Karkasse (6) angeordneten Laufstreifen und einen zwischen der Karkasse (6) und dem Laufstreifen (5) angeordneten Gürtel (7), der mindestens zwei Kordlagen (7A, 7B) umfaßt einschließlich einer schmäleren Gürtellage (7B) und einer breiteren Gürtellage (7A), wobei die Breite (WB) der schmäleren Gürtellage (7B) größer als die Bodenaufstandsbreite (WS) ist, welche als der Axialabstand zwischen den Kanten des Bodenberührungsbereichs des Laufstreifens (5) bestimmt ist, dadurch gekennzeichnet, daß der Laufstreifen (5) aus Gummi mit einer JIS A - Härte von nicht mehr als 60 Grad hergestellt ist, die Dicke des Laufstreifengummis nicht mehr als 10 mm beträgt, die Dicke T1 am Reifenäquator (C) größer als die Dicke T2 an den Kanten des Bodenaufstandsbereichs (12) des Laufstreifens (5) ist und der Unterschied T1 - T2 der beiden nicht weniger als 1,5 mm beträgt, das Verhältnis Hb/H der Radialhöhe Hb vom oberen Ende des Wulstkerns (2) zum oberen Ende des Wulstreiters (a) zu der Reifenquerschnittshöhe (H) weniger als 0,4 beträgt, und das Verhältnis Hc/Hb der Radialhöhe Hc von dem oberen Ende des Wulstkerns (2) zu dem oberen Ende des Karkass-Aufschlagabschnitts (6B) zu der Höhe Hb des oberen Endes (9a) des Wulstreiters kleiner als 0,5 ist.

## Revendications

1. Pneumatique comprenant une paire de tringles (2), une nappe (6) de carcasse repliée autour des tringles (2) afin qu'elle forme une paire de parties repliées (6A, 6B), une paire de pointes (9) de bourrage de talon disposées radialement vers l'extérieur à partir des tringles (2), une bande de roulement (5) placée radialement à l'extérieur de la partie bombée de la carcasse (6), et une ceinture (7) placée entre la carcasse (6) et la bande de roulement (5) et comprenant au moins deux nappes (7A, 7B) de câblés comprenant une nappe étroite (7B) et une nappe large (7A) de ceinture, la largeur (WB) de la nappe étroite (7B) de ceinture étant supérieure à la largeur (WS) de contact avec le sol qui est définie comme étant la distance axiale comprise entre les bords de la région de la bande de roulement (5) qui est au contact avec le sol, caractérisé en ce que la bande de roulement (5) est formée de caoutchouc ayant une dureté JIS A qui ne dépasse pas 60°, l'épaisseur du caoutchouc de la bande de roulement n'est pas inférieure à 10 mm, l'épaisseur T1, à l'équateur (C) du pneumatique, est supérieure à l'épaisseur T2 aux bords de la région (12) de la bande de roulement (5) qui est au contact avec le sol, et la différence entre elles T1 - T2 n'est pas inférieure à 1,5 mm, le rapport Hb/H de la hauteur radiale Hb comprise entre l'extrémité supérieure de la tringle (2) et l'extrémité supérieure de la pointe (a) de bourrage de talon et de la hauteur H de la section du pneumatique est inférieur à 0,4, et le rapport Hc/Hb de la hauteur radiale Hc comprise entre l'extrémité supérieure de la tringle (2) et l'extrémité supérieure de la partie repliée (6B) de carcasse et de la hauteur Hb de l'extrémité supérieure (9a) de la pointe de bourrage de talon est inférieur à 0,5.

# FIG.1

WT
WB
WS

7
7B 7A

a 5 12 f a
b
T2
6
d e
T1
C
T

9a
4
6B 6A
9 6B Hb
Hc
3
6B
11
2
8 3
10

H

EP 0 300 779 B1

FIG.2

FIG.3

# FIG.4

# FIG. 5